# EUROPEAN PATENT SPECIFICATION

(11) **EP 1 927 668 B1**
(45) Date of publication and mention of the grant of the patent: **24.04.2013**
(21) Application number: 07118205.9
(22) Date of filing: 10.10.2007
(51) Int. Cl.: C21D 9/50, B23K 9/025, C21D 1/42, C21D 9/08, B23K 31/00, B23K 101/06

(54) **Restoration method for deteriorated part and restoration apparatus for deteriorated part**
Verfahren und Vorrichtung zur Wiederherstellung eines beeinträchtigten Teils
Procédé de restauration pour partie endommagée et appareil de restauration pour partie endommagée

(30) Priority: 28.11.2006 JP 2006319613
(43) Date of publication of application: 04.06.2008
(73) Proprietor: Mitsubishi Heavy Industries, Ltd., Tokyo 108-8215 (JP)
(72) Inventor: Ozaki, Masashi, Nagasaki 851-0392 (JP); Takeuchi, Ko, Tokyo 100-8560 (JP); Tezuka, Hideshi, Tokyo 100-8560 (JP); Shiibashi, Akira, Nagasaki 850-8610 (JP); Kobayashi, Masahiro, Nagasaki 850-8610 (JP); Kodama, Masaru, Nagasaki 851-0392 (JP); Nishimura, Nobuhiko, Nagasaki 851-0392 (JP); Sakata, Fumitoshi, Tokyo 108-8215 (JP)
(74) Representative: Garkisch, Marcus

(56) References cited:
- JP-A- 61 104 029
- JP-A- 2003 253 337
- JP-A- 2006 083 440

## Description

### Field of the Invention

The present invention relates to a restoration method suitable for restoring a deteriorated part resulting from a creep or the like occurring in a metal member forming a high-temperature pipe for use in, for example, boilers and turbines of thermal and nuclear power plants and chemical plants.

### Description of the Related Art

Recently, in a high-temperature pipe for use in, for example, boilers and turbines of thermal and nuclear power plants and chemical plants, maintenance and management with adequate consideration given to deterioration of equipment over time and thermal fatigue caused by repetition of starting and stopping and rapid load changes has become increasingly important as the operation time has become longer.

For example, for a large-diameter and thick-wall pipe using a high-temperature pressure-resistant metal member, nondestructive inspections such as a structure inspection and an ultrasonic inspection are periodically conducted for finding deterioration in the metal member and its weld part in an early stage. The deteriorated part is repaired based on the results of the nondestructive inspections.

Here, techniques for repairing a metal member include a technique in which a deteriorated part suffering creep voids or cracks is locally thermally treated using a high-frequency heating coil, and creep voids or cracks are pressure-welded with an internal pressure due to thermal expansion to restore the deteriorated part (see, for example, Japanese Patent Laid-Open No. 2003-253337 on which the preamble portion of claim 1 is based).

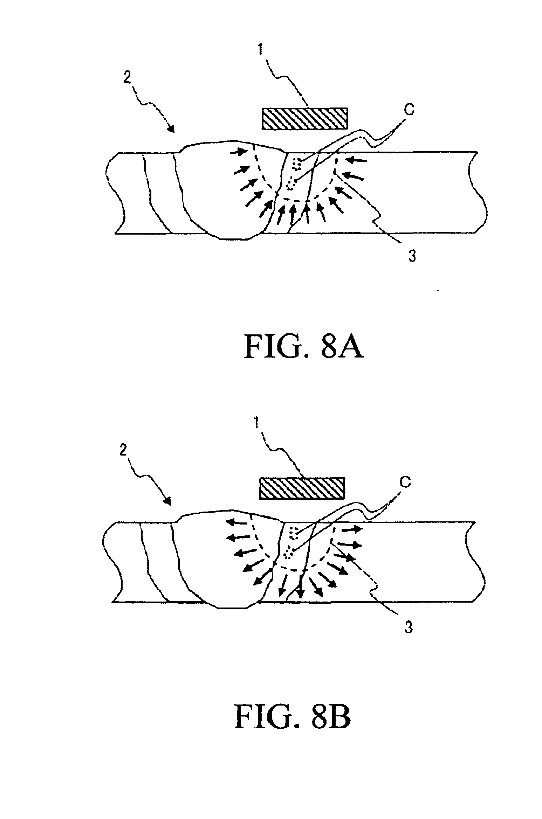

The restoration technique described in Patent Document 1 locally heats a region including a deteriorated part C by a heater 1 constructed of a high-frequency heating coil as shown in FIG. 8A. A region of which the temperature is raised by the heating is referred to a heated region 3. At this time, since the temperature of the periphery of the heated region 3 in a metal member 2 is not raised, a compression stress is produced in the heated region 3 as a result of hindrance of its thermal expansion. Therefore, the deteriorated part C, such as a creep void or crack, existing in the heated region 3 is pressure-welded with this compression stress and thereby eliminated. It is effective to raise the temperature of the heated region 3 as much as possible in order to increase the compression stress in the void pressure-welding treatment. However, since the outer surface of the metal member 2 near the heater 1 is melted if the temperature of the heated region 3 is raised, the heating temperature cannot be recklessly raised. As shown in FIG. 8B, the heated region 3 is shrunk as the region is cooled after the heat treatment. At this time, a tensile stress is produced in the heated region 3, since the periphery of the heated region 3 restrains the shrinkage of the heated region 3. Consequently, the deteriorated part C once pressure-welded may be opened. There has been the concern that a tensile residual stress is produced in the heated region 3 after the repair, and thus it cannot be expected that the repaired state is maintained for the long term. Further, the crystal structure is coarsened by the void pressure-welding treatment. However, a heat cycle alone, in which the temperature is raised and lowered across a transformation point in a subsequent recrystallization thermal treatment, may leave the coarse hardened structure and thus sufficient recrystallization is necessary.

Therefore, for reliably restoring the deteriorated part C, it has been required to provide a sufficiently large pressure-welding stress at the time of heating, reduce a tensile residual stress at the time of cooling and sufficiently recrystallize the coarse hardened structure into a structure comparable to that of a base material.

The present invention has been made in view of the situations described above, and its object is to provide a restoration method for a deteriorated part which is capable of easily and reliably repairing and restoring a deteriorated part generated in a metal member and maintaining the repaired state for the long term to prolong the lifetime of the metal member. Furthermore, an object of the present invention is to provide a restoration apparatus for a deteriorated part, which can carry out the restoration method for a deteriorated part.

### SUMMARY OF THE INVENTION

For achieving the objects described above, a restoration method for a deteriorated part according to the present invention is a method for restoring a deteriorated part generated in a metal member, comprising the features of claim 1.

According to this invention, the periphery of the first heated region is heated by the second heating step while the deteriorated part is locally heated by the first heating step, whereby a pressure by a thermal expansion force of the heated part of the periphery of the first heated region is exerted on the first heated region to increase the compression stress exerted on the deteriorated part. Furthermore, the first heating step is preceded so that the compression stress of the first heated region is allowed to sufficiently alleviate a creep, followed by the second heating step, whereby the compression stress exerted on the deteriorated part increases to reliably pressure-weld the deteriorated part as compared to a case where the first heated region and the second heated region are heated at the same time. Namely, the present invention has an effect of thermal expansion of the second heated region further adding a compression stress on the first heating region.

In the present invention, it is desirable to continue the first heating step and the second heating step for a time period that enables the thermal expansion of a heated part in the first heated region, respectively the thermal expansion force pressure of the heated part of the second heated region is exerted as a compression stress on the first heated region softened by the treating. The reason for this is that by transmitting heat added from outside by heating, the temperature of the inside of the thickness of the metal member is sufficiently raised to reliably pressure-weld the deteriorated part.

A metal member intended by the present invention normally comprises a base material and a weld metal jointing the base material, and the deteriorated part exists in a heat affected zone of the base material, which has been generated due to welding. A base material part other than the heat affected zone is often less deteriorative than the heat affected zone. In this case, the first heated region is formed to include the heat affected zone. It is desirable that the second heated region should be formed on a base material part adjacent to the heat affected zone. The base material part other than the heat affected zone is less deteriorative than the heat affected zone, and normally show a sufficient lifetime even if a tensile residual stress by a restoration treatment is exerted thereon. Since there is a possibility that the weld metal has voids due to creep damage, there is a risk that a tensile stress is exerted at the time of cooling to accelerate the damage when the region is heated. Therefore, the part of the weld metal is preferably avoided from being targeted as the first heated region and the second heated region.

In the present invention, it is desirable to include a cooling step of cooling the first heated region and cooling the second heated region in synchronization. In this way, a tensile stress produced at the time of cooling is received in the combined first heated region and second heated region. If the tensile stress is received in the combined first heated region and second heated region as in the present invention, an absolute tensile stress becomes low as compared to the case of FIG. 8 where the tensile stress is received only in the first heated region. Therefore, the deteriorated part once pressure-welded is less likely to open again, and further, a tensile residual stress exerted on the restored deteriorated part during operation of a unit after restoration can be reduced.

It is desirable that after completion of the cooling step, a restoration treatment area with the metal member subjected to first and second heat treatments should be subjected to a recrystallization thermal treatment. The recrystallization thermal treatment is a treatment of repeating the heating of the metal member to a temperature equal to or higher than a transformation point and the cooling the metal member to a temperature lower than the transformation point two or more times. By carrying out this treatment, voids, precipitates or grain boundary segregations existing along the grain boundary of the structure are confined within the grain to slow a crack propagation rate, and a damage progress rate can be thus reduced. Further, by carrying out an isothermal eutectoid transformation treatment in this heating and cooling process, a coarse hardened structure generated in the restoration treatment can be eliminated. Thus, in the area which has been subjected to the restoration treatment, a factor of hindering rupture ductility is suppressed to obtain good ductility.

For carrying out the restoration method described above, the present invention provides a restoration apparatus for restoring a deteriorated part generated in a metal member, comprising the features of claim 9.

In this apparatus, heating by the first heater precedes heating by the second heater, whereby the deteriorated part generated in the metal member and its periphery can be heated and cooled with appropriate temperature control to easily carry out an optimum thermal treatment in the deteriorated part.

The present invention can independently carry out a recrystallization thermal treatment method, wherein an isothermal eutectoid transformation treatment is carried out in a heating and cooling process of repeating a heating/cooling treatment of heating the metal member to a temperature equal to or higher than a transformation point and cooling the metal member to a temperature lower than the transformation point two or more times to raise and lower the temperature across the transformation point.

Consequently, the area restored by the thermal treatment is made to have a structure of high ductility by the heating/cooling step after the thermal treatment, and voids, precipitates or grain boundary segregations existing along the grain boundary of the structure are confined within the grain to slow a crack propagation rate and reduce a damage progress rate, and moreover, by the isothermal eutectoid transformation step, a coarse hardened structure is eliminated, and hindrance of rupture ductility is suppressed to obtain further good ductility.

### BRIEF DESCRIPTION OF THE DRAWINGS

FIG. 1 is a perspective view showing a restoration apparatus according to an embodiment of the present invention;
FIG. 2 is a view showing a positional relationship of heaters at the time of restoration by the restoration apparatus;
FIG. 3 is a sectional view showing a state of arrangement of heaters with respect to a restoration part;
FIG. 4 is a graph diagram showing a change in temperature at the time of restoration;
FIGS. 5A and 5B are views for explaining a restoration method for a deteriorated part, where FIG. 5A is a sectional view showing a state of heating by a main heater and FIG. 5B is a sectional view showing a state of heating by the main heater and a sub heater;
FIG. 6 is a graph diagram showing a change in temperature and a change in metal structure at the time of a recrystallization thermal treatment in the restoration method according to this embodiment;
FIGS. 7A and 7B are microscopic picture of an HAZ zone 15, where FIG. 7A is a microscopic picture before a restoration thermal treatment and FIG. 7B is a microscopic picture after the restoration treatment; and
FIGS. 8A and 8B are views for explaining the conventional restoration method, where FIG. 8A is a sectional view showing a state of heating and FIG. 8B is a sectional view showing a state of a cooling process.

### DETAILED DESCRIPTION OF THE PREFERRED EMBODIMENTS

Embodiments of a restoration method and apparatus for a deteriorated part according to the present invention will be described below with reference to the drawings.

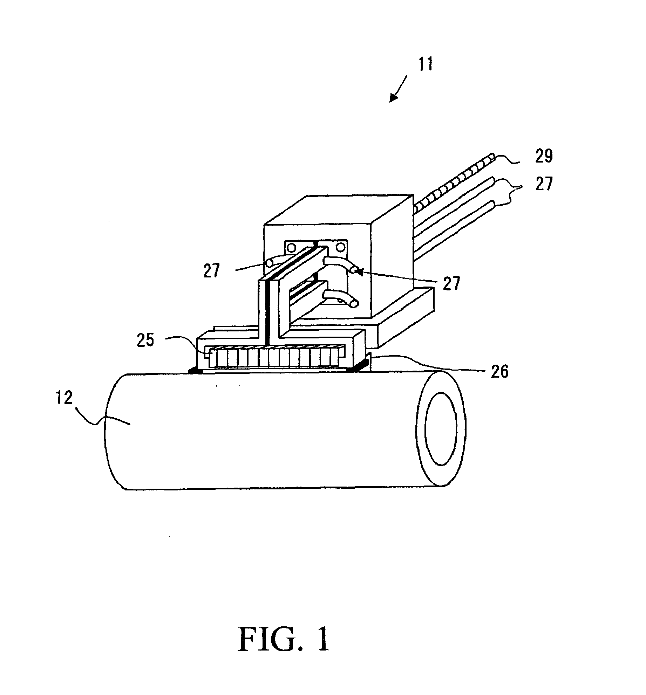

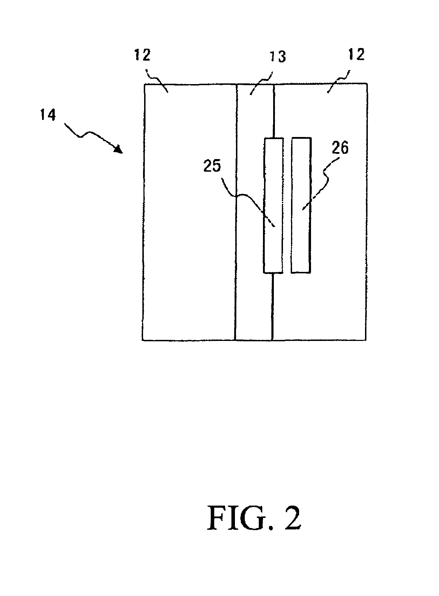

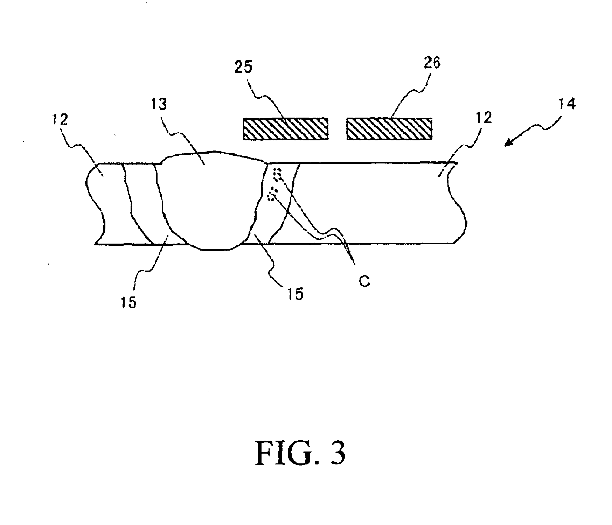

FIG. 1 is a perspective view showing a restoration apparatus according to an embodiment of the present invention. FIG. 2 is a view showing a positional relationship of heaters when a restoration method is carried out by the restoration apparatus. FIG. 3 is a sectional view showing a state of arrangement of heaters with respect to a restoration part.

As shown in FIG. 1, the restoration apparatus 11 is attached to a pipe 12 constructed of, for example, a low alloy steel pipe.

Here, as shown in FIGS. 2 and 3, in a high-temperature pressure-resistant weld part (metal member) 14 with pipes 12 welded together by a weld metal 13, an HAZ zone (heat affected zone) 15 is generated in a boundary between the weld metal 13 and each pipe 12 due to a thermal effect when the weld metal 13 is welded. In the high-temperature pressure-resistant weld part 14, a deteriorated part C such as many creep voids and cracks may be generated in the HAZ zone 15 due to the long-term use. Thus, particularly the strength of the HAZ zone 15 decreases to cause a rupture and the like in the high-temperature pressure-resistant weld part 14.

Here, materials of the pipe 12 include, for example, low alloy steels (STPA 22, STPA 23, STPA 24) having a Cr content of 3% or less (not including 0%) and an Mo content of 2% or less (not including 0%). Materials of the weld metal 13 include, for example, metals common to the material of the pipe 12, which have a Cr content of 3% or less (not including 0%) and an Mo content of 2% or less (not including 0%). Of course, the present invention is not limited to the materials described above, but can be applied to other various materials.

This embodiment will be described using as an example a case where the restoration apparatus 11 is attached to the pipe 12 to restore the high-temperature pressure-resistant weld part 14 with the deteriorated part C generated in the HAZ zone 15.

In this restoration apparatus 11, a main heater (first heater) 25 and a sub heater (second heater) 26, each constructed of a high-frequency heating coil, are spaced relative to each other and arranged in parallel. The main heater 25 and the sub heater 26 are flat, and placed along the outer circumferential surface of the pipe 12 with the restoration apparatus 11 attached to the pipe 12.

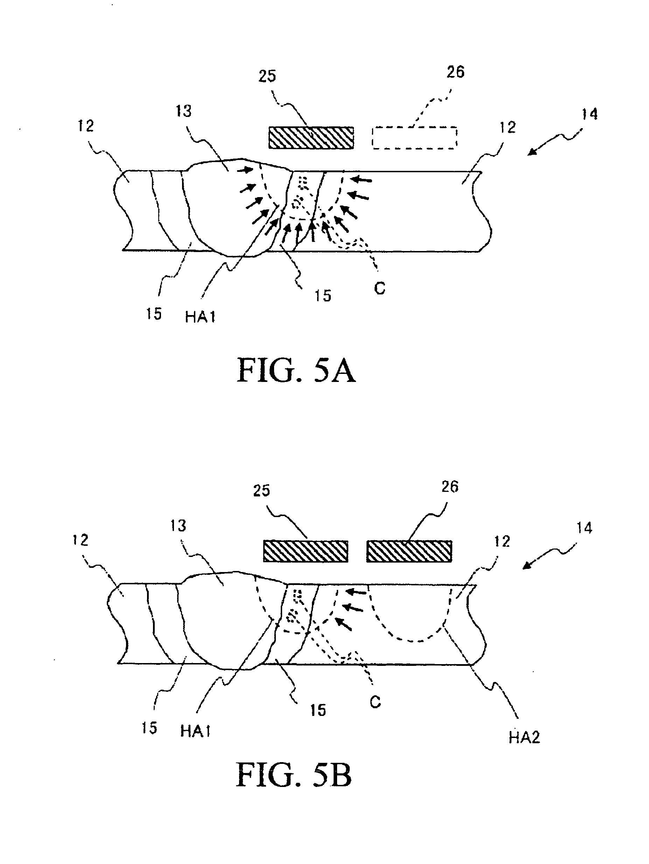

The main heater 25 is placed at a position opposite to a boundary between the pipe 12 and the weld metal 13 (position to face the deteriorated part C) with the restoration apparatus 11 placed along the outer circumferential surface of the pipe 12. Further, the sub heater 26 is placed so as to be opposite the pipe 12 at a position deviated from the boundary between the pipe 12 and the weld metal 13. Namely, the sub heater 26 is placed so as to face a part deviated from the boundary between the pipe 12 and weld metal 13 on the periphery of a region heated by the main heater 25. In this way, the restoration apparatus 11 can heat a wide range of the high-temperature pressure-resistant weld part 14 and its periphery including the heated region HA1 by the main heater 25(FIG. 5). In this connection, the main heater 25 and the sub heater 26 are not necessarily flat, but may be annular or circular over the entire circumference of the pipe 12.

The restoration apparatus 11 comprises a water cooling pipe 27 for cooling a coil and a power cable 29. The main heater 25 and the sub heater 26 are controlled so that the temperature of the surface of the member detected by a thermocouple mounted on the surface of the member just below each heater is a predetermined temperature.

Procedures for restoring the high-temperature pressure-resistant weld part 14 of the pipe 12 using the above restoration apparatus 11 will now be described.

In this embodiment, a restoration thermal treatment and a recrystallization thermal treatment are carried out by the restoration apparatus 11.

### (Restoration Thermal Treatment)

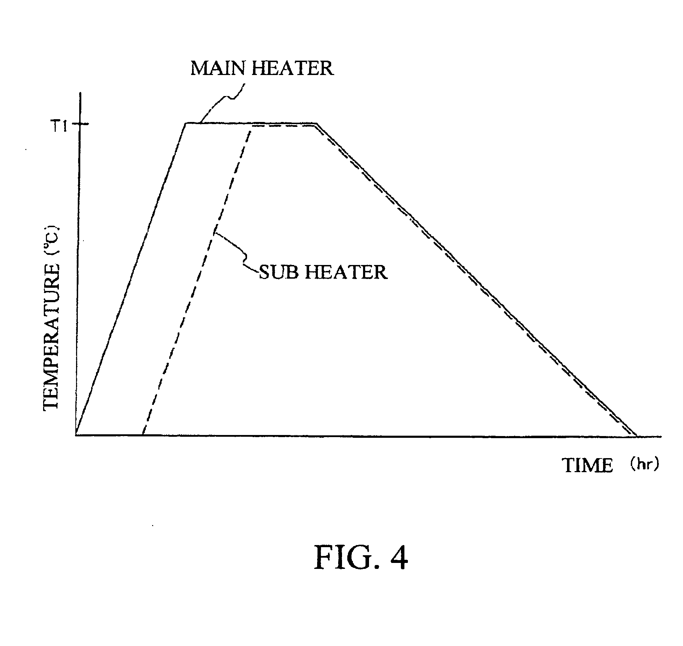

First, the restoration thermal treatment will be described. FIG. 4 is a graph diagram showing a change in temperature at the time of the restoration thermal treatment, and FIGS. 5A and 5B are views for explaining the restoration method for a deteriorated part.

### (1) Pretreatment Step

First, an oxide film of the high-temperature pressure-resistant weld part 14 as a part to be repaired is removed as required.

Next, the main heater 25 is placed at a position to face a boundary between the pipe 12 and the weld metal 13. As a result, the sub heater 26 is placed so as to face the pipe 12 at a position deviated from the boundary between the pipe 12 and the weld metal 13.

### (2) Local Heating Step (First Heating Step)

In this state, first, the surface of a boundary member between the pipe 12 of high-temperature pressure-resistant weld part 14 and the weld metal 13 is rapidly heated to temperature T1 (for example, to a temperature of 1050 to 1250°C, preferably 1200°C, for 10 minutes) as shown with a solid line in FIG. 4. Temperature T1 is preferably higher than a transformation point of the material (for example, transformation point A3 which is a transformation point between α-Fe and γ-Fe).

Consequently, thermal expansion of a heated part occurs in a region heated by the main heater 25 (first heated region) HA1 in the high-temperature pressure-resistant weld part 14. At this time, the periphery of the heated region HA1 exerts a restraint force on thermal expansion of the heated region HA1 because it has not undergone thermal expansion. Therefore, a compression stress is exerted on the heated region HA1 due to the thermal expansion of itself and the restraint by the periphery. A deteriorated part C such as creep voids or the like is pressure-welded by this compression stress. The compression stress exerted on the heated region HA1 is shown with an arrow in FIG. 5A.

### (3) Peripheral Heating Step (Second Heating Step)

While heating by the main heater 25 is continued after elapse of a time period that enables the thermal expansion of a heated part in the first heated region after heating by the main heater 25 is started, heating by the sub heater 26 is started to heat the vicinity of the heated region HA1 by the main heater 25 to temperature T1 in a profile shown with a dashed line in FIG. 4. Heating by the sub heater 26 is started, for example, 300 seconds after the surface of the member just below the main heater 25 reaches a desired temperature (temperature T1).

As a result, thermal expansion occurs in a heated region (second heated region) HA2 of the pipe 12 heated by the sub heater 26. The heated part of the heated region HA2 is restrained because a base material part on a side opposite to a side adjacent to the heated region HA1 (right side in FIG. 5) is not thermally expanded. Consequently, the pressure by a thermal expansion force of the heated part of the heated region HA2 is exerted as a compression stress on the heated region HA1 softened by heating by the main heater 25. Therefore, the pressure-welding effect on the deteriorated part C can be improved. For obtaining this effect, it is necessary to continue the local heating step and the peripheral heating step for a the time period that enables the thermal expansion of a heated part in the first heated region, respectively a period that enables the thermal expansion force pressure of the heated part of the second heated region to be exerted. The compression stress exerted on the heated region HA1 is shown with an arrow in FIG. 5B.

By heating by the sub heater 26, a wide range of the high-temperature pressure-resistant weld part 14 and its periphery including the heated region HA1 of a repaired area by the main heater 25 due to a synergistic effect with heating by the main heater 25. The range of heating is thus widened, whereby a tensile stress is reduced in a cooling step that is subsequently carried out.

### (4) Cooling Step

After heating of the heated region HA2 on the periphery by the sub heater 26 is continued subsequent to local heating of the heated region HA1 by the main heater 25 in the manner described above, the heating temperatures by the main heater 25 and the sub heater 26 are lowered in synchronization as shown in FIG. 4. The cooling rate is preferably about 50°C/hr, for example. As a result, a wide range including the restoration area of the high-temperature pressure-resistant weld part 14 is gently cooled.

Consequently, the tensile stress produced at the time of cooling is dispersed over a wide range of the high-temperature pressure-resistant weld part 14, i.e. a region including at least the heated region HA1 and the heated region HA2, and therefore its absolute value is low as compared to a case where only the heated region HA1 exists. Therefore, the influence of the tensile stress on the restoration area by thermal shrinkage in the cooling step is minimized.

Therefore, a defective situation in which the pressure-welded deteriorated part C is opened or a tensile residual stress is produced in the high-temperature pressure-resistant weld part 14 is eliminated, and the repaired state of this high-temperature pressure-resistant weld part 14 can be thus maintained for the long term to prolong the lifetime of the pipe 12.

### (Recrystallization Thermal Treatment)

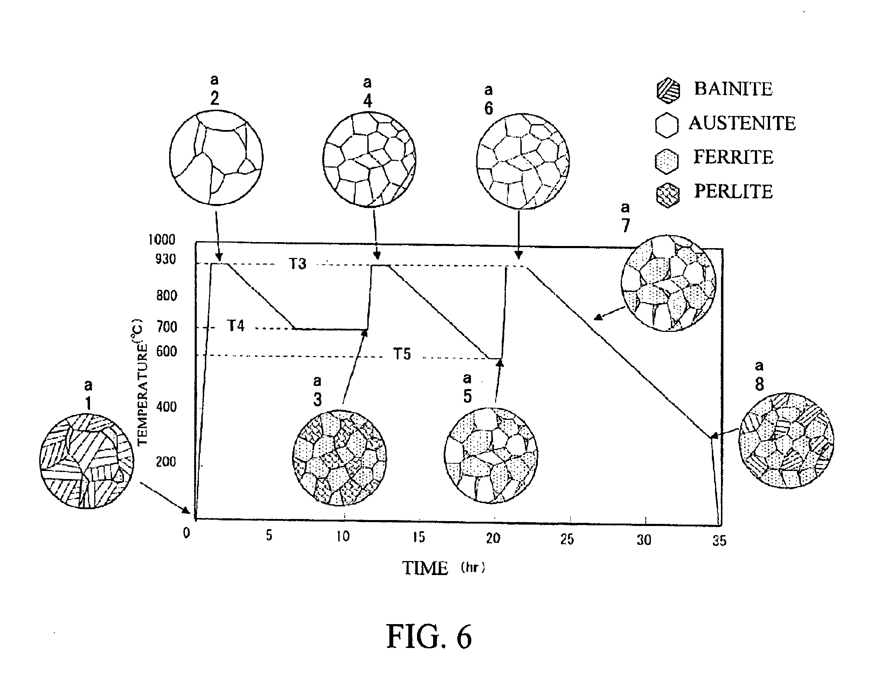

The recrystallization thermal treatment will now be described. FIG. 6 is a graph diagram showing a change in temperature and a change in metal structure at the time of the recrystallization thermal treatment in the restoration method according to this embodiment.

The metal structure of the restoration area gently cooled in the restoration thermal treatment described previously is a bainite structure including in part ferrite as shown with symbol al in FIG. 6.

### (1) Heating Step

In the recrystallization thermal treatment, first, the restoration area is heated to temperature T3 (for example, 900 to 950°C, preferably 930°C) exceeding the transformation point A3 by the main heater 25 and held for for example, 30 to 120 minutes, preferably 60 minutes. This thermal treatment changes the metal structure of the restoration area into an austenite structure as shown with symbol a2 in FIG. 6. A coarse hardened structure formed at the time of the restoration thermal treatment remains in part in the metal structure at this time. The coarse hardened structure may hinder rupture ductility.

### (2) Isothermal eutectoid transformation step

Next, an isothermal eutectoid transformation treatment is carried out in which the temperature control of the main heater 25 is performed, the restoration area is cooled to temperature T4 (for example, 680 to 730°C, preferably 700°C) lower than the transformation point A3, and held at temperature T4 for a fixed time (for example, 180 to 600 minutes, preferably 300 minutes). This thermal treatment subjects the austenite structure to eutectoid transformation. Therefore, as shown with symbol a3 in FIG. 6, the metal structure of the restoration area becomes a ferrite perlite structure having the eutectoid of ferrite and perlite, and the coarse hardened structure is eliminated.

Here, if the held temperature of isothermal eutectoid transformation is lower than a nose of isothermal eutectoid transformation, much time is required for isothermal eutectoid transformation of the restoration area, and if the held temperature considerably exceeds the nose, isothermal eutectoid transformation in the restoration area becomes difficult. Therefore, temperature T4 at which the restoration area is held in the isothermal eutectoid transformation step is preferably a temperature allowing the metal structure of the restoration area to be subjected to isothermal eutectoid transformation smoothly.

The time over which the restoration area is held at temperature T4 in the isothermal eutectoid transformation step may be a time over which the region with crystal grains coarsened in the first heating step and the second heating step completes isothermal eutectoid transformation.

### (3) Heating Step

The restoration area is heated again to temperature T3 exceeding the transformation point A3 by the main heater 25, and held for for example, 30 to 120 minutes, preferably 60 minutes. The thermal treatment changes again the metal structure of the restoration area into an austenite structure as shown with symbol a4 in FIG. 6. At this time, the metal structure becomes an austenite structure free of the coarse hardened structure, since the coarse hardened structure has been eliminated in the previous isothermal eutectoid transformation step.

### (4) Cooling Step

Next, the restoration area is cooled to temperature T5 (for example, 550 to 650°C, preferably 500°C) sufficiently lower than the transformation point A3. By this thermal treatment, the restoration area is made to have a metal structure having the eutectoid of ferrite and perlite in a part of the austenite structure as shown with symbol a5 in FIG. 6.

### (5) Heating Step

The restoration area is heated again to temperature T3 exceeding the transformation point A3 by the main heater 25, and held for example, 30 to 120 minutes, preferably 60 minutes. The thermal treatment changes again the metal structure of the restoration area into an austenite structure as shown with symbol a6 in FIG. 6.

### (6) Cooling Step

Thereafter, the temperature control of the main heater 25 is performed, and the restoration area is cooled at a cooling rate for example of about 50°C/hr).

As a result of cooling in this manner, the metal structure of the restoration area becomes a ferrite perlite structure including bainite as shown with symbol a8 in FIG. 6 with the austenite structure subjected to continuous cooling transformation as shown with symbol a7 in FIG. 6.

In the recrystallization thermal treatment described above, the restoration area is heated and cooled by temperature control of the main heater 25 to repeat the transformation treatment two or more times, whereby the restoration area becomes a ferrite perlite structure of high ductility comparable to that of the pipe 12 as a base material. By the recrystallization thermal treatment described above, voids, precipitates or grain boundary segregations existing along the grain boundary of the structure at the time of welding are confined within the grain to slow a crack propagation rate and reduce a damage progress rate. Moreover, a coarse hardened structure is eliminated by the isothermal eutectoid transformation step carried out in the process of the recrystallization thermal treatment, and therefore hindrance of rupture ductility is suppressed to obtain good ductility.

As described above, according to the restoration method for a deteriorated part according to this embodiment, a pressure by a thermal expansion force of the heated part consisting of the heated region HA2 on the periphery of the deteriorated part C can be exerted on the heated region HA1 of the deteriorated part C. Consequently, the deteriorated part C can be reliably pressure-welded with a high compression force to restore the deteriorated part C satisfactorily over the total thickness of its heated region HA1, and restoration quality can be thus improved.

Since the deteriorated part C and its periphery are cooled at the same time, a tensile stress produced in the deteriorated part C at the time of cooling can be dispersed over a wide range, and the influence of the tensile stress on the restoration area can be thus minimized. A problematic situation in which a tensile residual stress is produced in the restoration area is eliminated, the repaired state of the high-temperature pressure-resistant weld part 14 can be maintained for the long term, and the lifetime of the pipe 12 can be thus prolonged. In this embodiment, two times of heating: first heating and second heating have been shown, but the number of times of heating is not limited to two as long as it is two or more.

Further, by carrying out the heating/cooling step of subjecting the restoration area to transform two or more times and the isothermal eutectoid transformation step of continuing the transformation on the restoration area for a fixed time, the restoration area can be made to have a structure of high ductility comparable to that of a base material composed of the pipe 12. Voids, precipitates or grain boundary segregations existing along the grain boundary of the structure are confined within the grain, whereby a crack propagation rate can be slowed to reduce a damage progress rate. Moreover, a coarse hardened structure is eliminated, whereby hindrance of rupture ductility can be suppressed to obtain good ductility.

According to the restoration apparatus 11 for the deteriorated part C according to this embodiment, there are provided the main heater 25 and the sub heater 26, so that by performing the temperature control of the main heater 25 and the sub heater 26, the deteriorated part C generated in the high-temperature pressure-resistant weld part 14 and its periphery can be heated and cooled with appropriate temperature control to easily carry out an optimum thermal treatment in the deteriorated part C.

Further, the number of repetitions of transformation of the restoration area by the heating/cooling step in the recrystallization thermal treatment is preferably 3 to 5.

This embodiment has been described using as an example an apparatus comprising two heaters: the main heater 25 and the sub heater 26, but the number of heaters is not limited to two as long as it is two or more.

The main heater 25 and the sub heater 26 are not limited to the high-frequency heating coil type, but various kinds of heaters capable of temperature control may be used.

### [Example]

The method described above was verified.

For the pipe 12, a pipe made of STAP 24 material (2.25% Cr-1% Mo steel) and having a pipe diameter of 355 mm and a wall thickness of 77 mm was used. For the weld metal 13, a material same as that of the pipe 12 was used.

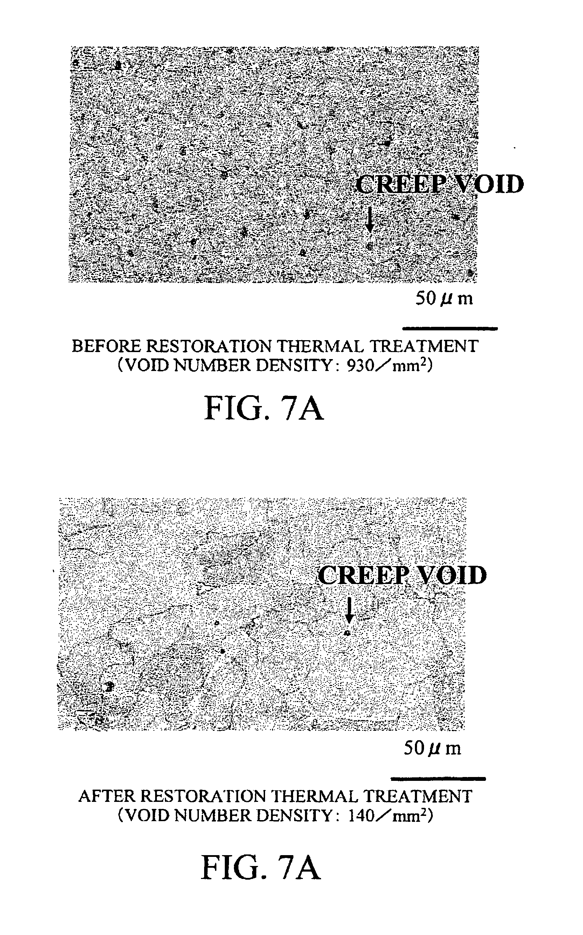

FIG. 7A is a microscopic picture of the HAZ zone 15 before the restoration thermal treatment, where the number density of voids (deteriorated part C) is 930/mm².

The main heater 25 was placed at a distance of 10 mm in the radial direction from the surface of the pipe 12, at a position opposite to a boundary between the pipe 12 and the weld metal 13. The sub heater 26 was placed at a position deviated by 50 mm in the circumferential direction and by 10 mm in the radial direction of the pipe 12 from the boundary between the pipe 12 and the weld metal 13.

The surface of the boundary member between the pipe 12 of the high-temperature pressure-resistant weld part 14 and the weld metal 13 was rapidly heated to temperature T1 = 1200°C by the main heater 25.

300 seconds after the surface of the boundary member between the pipe 12 of the high-temperature pressure-resistant weld part 14 and the weld metal 13 reached T1 = 1200°C by heating by the main heater 25, heating by the sub heater 26 was started to heat the vicinity of the heated region HA1 by the main heater 25 to temperature T1 = 1200°C while heating by the main heater 25 was continued.

Heating of the heated region HA2 on the periphery by the sub heater 26 was continued for 1200 seconds, followed by lowering heating temperatures by the main heater 25 and the sub heater 26 in synchronization at a cooling rate of 50°C/hr.

Thereafter, the restoration area was heated to 930°C by the main heater 25 and held for 60 minutes.

Next, temperature control of the main heater 25 was performed, and the restoration area was cooled to 700°C and held for 300 minutes to be subjected to the isothermal eutectoid transformation treatment.

Subsequently, the restoration area was heated to 930°C by the main heater 25, held for 60 minutes, and cooled to 500°C.

Further, the restoration area was heated to 930°C by the main heater 25, held for 60 minutes, and cooled at about 50°C/hr.

FIG. 7B is a microscopic picture of the HAZ zone 15 after the restoration thermal treatment, where the number density of voids (deteriorated part C) is 140/mm², and it was confirmed that the void number density decreased by 85% compared to that before the restoration thermal treatment. Further, it was confirmed that voids were situated in the grain boundary before the restoration thermal treatment, whereas they were confined within the grain after the restoration thermal treatment.

### Industrial Applicability

According to the restoration method for a deteriorated part according to the present invention, a large compression stress can be exerted on the deteriorated part, since heating of the deteriorated part precedes heating of the periphery of the deteriorated part. Furthermore, since the deteriorated part and its periphery are cooled in synchronization, a tensile stress produced in the deteriorated part at the time of cooling can be dispersed over a wide range, and the influence of the tensile stress on a restoration area can be thus minimized. Consequently, a tensile residual stress in the restoration area can be reduced, and the lifetime of a metal member can be thus prolonged.

By carrying out an isothermal eutectoid transformation step on a restoration treatment area for a fixed time to continue transformation in addition to a heating/cooling step of subjecting the restoration treatment area to transform two or more times, voids, precipitates or grain boundary segregations existing along the grain boundary of the structure can be confined within the grain. Furthermore, by carrying out the isothermal eutectoid transformation step in addition to the heating/cooling step, a coarse hardened structure can be eliminated, and hindrance of rupture ductility can be suppressed to obtain good ductility. As a result, a crack propagation rate can be slowed to reduce a damage progress rate.

According to a restoration apparatus for a deteriorated part according to the present invention, there are provided a first heater and a second heater. By performing temperature control of the first heater and the second heater, the deteriorated part generated in a metal member and its periphery can be heated and cooled with appropriate temperature control to easily carry out a thermal treatment optimum for restoration of the deteriorated part.

## Claims

1. A method for restoring a deteriorated part (C) generated in a metal member, comprising:
a first heating step of heating a local region including the deteriorated part (C) to form a first heated region (HA1), and pressure-welding the deteriorated part (C) by a compression stress on the first heated region (HA1) due to restraint of thermal expansion of the first heated region (HA1) by the periphery of the first heated region (HA1):
**characterized in that** the method further comprises a second heating step of forming a second heated region (HA2) by heating the periphery of the first heated region (HA1) after elapse of a time period after the start of heating in the first heating step sufficient that thermal expansion of a heated part occurs in the first heated region (HA1), and while the first heated region (HA1) is heated.

2. The restoration method for a deteriorated part according to claim 1, wherein the first heating step and the second heating step are continued for a time period that allows the pressure by a thermal expansion force of the heated part of the second heated region (HA2) to be exerted as a compression stress on the first heated region (HA1) softened by its heating.

3. The restoration method for a deteriorated part according to claim 1 or 2, wherein the metal member comprises a base material (12) and a weld metal (13) for jointing the base material (12), the deteriorated part (C) exists in a heat affected zone (15) of the base material (12) generated by welding, and the first heated region (HA1) is formed to include the heat affected zone (15).

4. The restoration method for a deteriorated part according to claim 3, wherein the second heated region (HA2) is formed on the base material (12) adjacent to the heat affected zone (15).

5. The restoration method for a deteriorated part according to any one of claims 1 to 4, comprising a cooling step of cooling the first heated region (HA1) and cooling the second heated region (HA2) in synchronization.

6. The restoration method for a deteriorated part according to claim 5, wherein after the cooling step is completed, the first and second heated regions (HA1,HA2) are subjected to a recrystallization thermal treatment.

7. The restoration method for a deteriorated part according to claim 6, wherein the recrystallization thermal treatment is to repeat two or more times a treatment in which the metal member (12) is heated to a temperature (T3) equal to or higher than its transformation point (A3) and cooled to a temperature (T4,T5) lower than the transformation point (A3).

8. The restoration method for a deteriorated part according to claim 6, wherein an isothermal eutectoid transformation treatment is carried out in the process of carrying out the recrystallization thermal treatment.

9. An apparatus for restoring a deteriorated part (C) generated in a metal member, comprising:
a first heater (25) to be placed at a position to face the deteriorated part (C) for locally heating the deteriorated part (C) ; and
a second heater (26) for heating the periphery of a region (HA1) heated by the first heater (25), wherein the heating of the second heater (26) is started while heating of the first heater (25) is continued after elapse of a time after heating of the first heater (25) is started sufficient that thermal expansion of a heated part occurs in the first heated region (HA1).

## Patentansprüche

1. Ein Verfahren zum Wiederherstellen eines beeinträchtigten Teils (C), das in einem Metallelement gebildet ist, mit:
einem ersten Erhitzungsschritt des Erhitzens eines lokalen Bereichs einschließlich dem beeinträchtigten Teil (C) zur Bildung eines ersten erhitzten Bereichs (HA1), und Druckschweißen des beeinträchtigen Teils (C) durch eine Druckbelastung auf den ersten erhitzen Bereich (HA1) aufgrund einer Begrenzung der thermischen Expansion des ersten erhitzen Bereichs (HA1) durch die Peripherie des ersten erhitzten Bereichs (HA1),
**dadurch gekennzeichnet, dass** das Verfahren ferner einen zweiten Erhitzungsschritt des Bildens eines zweiten erhitzten Bereichs (HA2) durch Erhitzen der Peripherie des ersten erhitzten Bereichs (HA1) nach Ablauf einer Zeitspanne nach dem Start des Erhitzens in dem ersten Erhitzungsschritt, die ausreicht, dass die thermische Expansion eines erhitzten Teils in dem ersten erhitzten Bereich (HA1) auftritt, und während der erste erhitzte Bereich (HA1) erhitzt wird, aufweist.

2. Das Wiederherstellungsverfahren für ein beeinträchtigtes Teil gemäß Anspruch 1, wobei der erste Erhitzungsschritt und der zweite Erhitzungsschritt für eine Zeitspanne fortgesetzt werden, die es ermöglicht, dass der Druck durch eine thermische Expansionskraft des erhitzten Teils des zweiten erhitzten Bereichs (HA2) als eine Druckbelastung auf den durch dessen Erhitzung erweichten ersten erhitzten Bereich (HA1) ausgeübt werden kann.

3. Das Wiederherstellungsverfahren für ein beeinträchtigtes Teil gemäß Anspruch 1 oder 2, wobei das Metallelement ein Basismaterial (12) und ein Schweißmetall (13) zum Verbinden des Basismaterials (12) aufweist, wobei das beeinträchtigte Teil (C) in einer Wärmeeinwirkungszone (15) des Basismaterials (12) vorliegt, die durch Schweißen erzeugt wird, und wobei der erste erhitzte Bereich (HA1) so gebildet wird, dass er die Wärmeeinflusszone (15) umfasst.

4. Das Wiederherstellungsverfahren für ein beeinträchtigtes Teil gemäß Anspruch 3, wobei der zweite erhitzte Bereich (HA2) an dem Basismaterial (12) angrenzend an die Wärmeeinflusszone (15) gebildet wird.

5. Das Wiederherstellungsverfahren für ein beeinträchtigtes Teil gemäß einem der Ansprüche 1 bis 4, mit einem Abkühlschritt des Abkühlens des ersten erhitzten Bereichs (HA1) und des Abkühlens des zweiten erhitzten Bereichs (HA2) synchron miteinander.

6. Das Wiederherstellungsverfahren für ein beeinträchtigtes Teil gemäß Anspruch 5, wobei nach Abschluss des Abkühlschritts die ersten und zweiten erhitzten Bereiche (HA1, HA2) einer Rekristallisations-Wärmebehandlung unterzogen werden.

7. Das Wiederherstellungsverfahren für ein beeinträchtigtes Teil gemäß Anspruch 6, wobei die Rekristallisations-Wärmebehandlung eine Behandlung zwei Mal oder öfter wiederholt, bei der das Metallelement (12) auf eine Temperatur (T3) erhitzt wird, die gleich oder höher ist als dessen Transformationspunkt (A3), und auf eine Temperatur (T4, T5) abgekühlt wird, die niedriger ist, als der Transformationspunkt (A3).

8. Das Wiederherstellungsverfahren für ein beeinträchtigtes Teil gemäß Anspruch 6, wobei eine isotherme eutektoide Transformationsbehandlung in dem Prozess des Ausführens der Rekristallisations-Wärmebehandlung ausgeführt wird.

9. Eine Vorrichtung zum Wiederherstellen eines beeinträchtigten Teils (C), das in einem Metallelement gebildet ist, mit:
einer ersten Heizeinrichtung (25), die an einer Position anzuordnen ist, die dem beeinträchtigten Teil (C) zur lokalen Erhitzung des beeinträchtigten Teils (C) zugewandt ist, und
einer zweiten Heizeinrichtung (26) zum Erhitzen der Peripherie eines Bereichs (HA1), der durch die erste Heizeinrichtung (25) erhitzt wird, wobei das Heizen der zweiten Heizeinrichtung (26) gestartet wird, während das Heizen der ersten Heizeinrichtung (25) nach Ablauf einer Zeit, nachdem das Heizen der ersten Heizeinrichtung (25) gestartet ist, die ausreichend ist, dass eine thermische Expansion eines erhitzten Teils in dem ersten erhitzten Bereich (HA1) auftritt, fortgesetzt wird.

## Revendications

1. Procédé de restauration d'une partie détériorée (C) générée dans un élément métallique, qui comprend :
une première étape de chauffage qui consiste à chauffer une région locale qui comprend la partie détériorée (C) afin de former une première région chauffée (HA1), et à souder par pression la pièce détériorée (C) à l'aide d'une contrainte de compression sur la première région chauffée (HA1) due à la restriction de la dilatation thermique de la première région chauffée (HA1) à la périphérie de la première région chauffée (HA1) ;
**caractérisé en ce que** le procédé comprend en outre une seconde étape de chauffage qui consiste à former une seconde région chauffée (HA2) en chauffant la périphérie de la première région chauffée (HA1) après qu'une période de temps se soit écoulée après le début du chauffage de la première étape de chauffage suffisant pour provoquer la dilatation thermique d'une pièce chauffée dans la première région chauffée (HA1), et pendant que la première région chauffée (HA1) est chauffée.

2. Procédé de restauration d'une partie détériorée selon la revendication 1, dans lequel la première étape de chauffage et la seconde étape de chauffage sont poursuivies pendant une période de temps qui permet à la pression due à la force de dilatation thermique de la pièce chauffée de la seconde région chauffée (HA2) d'être exercée comme une contrainte de compression sur la première région chauffée (HA1) ramollie par son chauffage.

3. Procédé de restauration d'une partie détériorée selon la revendication 1 ou 2, dans lequel l'élément métallique comprend un matériau de base (12) et un métal de soudage (13) destiné à joindre le matériau de base (12), la partie détériorée (C) existe dans une zone affectée par la chaleur (15) du matériau de base (12) générée par le soudage, et la première région chauffée (HA1) est formée afin d'inclure la zone affectée par la chaleur (15).

4. Procédé de restauration d'une partie détériorée selon la revendication 3, dans lequel la seconde région chauffée (HA2) est formée sur le matériau de base (12) adjacent à la zone affectée par la chaleur (15).

5. Procédé de restauration d'une partie détériorée selon l'une quelconque des revendications 1 à 4, qui comprend une étape de refroidissement de manière à refroidir la première région chauffée (HA1) et à refroidir la seconde région chauffée (HA2) de manière synchronisée.

6. Procédé de restauration d'une partie détériorée selon la revendication 5, dans lequel, après l'étape de refroidissement, la première et la seconde régions chauffées (HA1, HA2) sont soumises à un traitement thermique de recristallisation.

7. Procédé de restauration d'une partie détériorée selon la revendication 6, dans lequel le traitement thermique de recristallisation consiste à répéter deux fois ou plus un traitement au cours duquel l'élément métallique (12) est chauffé à une température (T3) égale ou supérieure à son point de transformation (A3) et refroidi à une température (T4, T5) inférieure au point de transformation (A3).

8. Procédé de restauration d'une partie détériorée selon la revendication 6, dans lequel un traitement de transformation eutectoïde isotherme est effectué au cours du processus de traitement thermique de recristallisation.

9. Procédé de restauration d'une partie détériorée (C) générée dans un élément métallique, qui comprend :
un premier élément chauffant (25) placé face à la partie détériorée (C) afin de chauffer localement la partie détériorée (C) ; et
un second élément chauffant (26) destiné à chauffer la périphérie d'une région (HA1) chauffée par le premier élément chauffant (25), dans lequel le chauffage du second élément chauffant (26) est lancé pendant que le chauffage du premier élément chauffant (25) est poursuivi après qu'une période de temps se soit écoulée après le début du chauffage du premier réchauffeur (25), suffisant pour provoquer la dilatation thermique d'une partie chauffée dans la première zone chauffée (HA1).
